# EUROPEAN PATENT APPLICATION

(11) **EP 4 580 241 A1**
(43) Date of publication of application: **02.07.2025**
(21) Application number: 22956124.6
(22) Date of filing: 26.08.2022
(51) Int. Cl.: H04W 24/02

(54) **CODEBOOK STRUCTURE CONFIGURATION METHOD AND APPARATUS, CODEBOOK STRUCTURE REPORTING METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/115153
(87) International publication number: WO 2024/040578

(57) **Abstract**

The present application relates to the field of mobile communications. Disclosed are a codebook structure configuration method and apparatus, a codebook structure reporting method and apparatus, a device, and a storage medium. The codebook structure configuration method comprises: receiving first configuration information, the first configuration information being used for configuring a codebook structure type of frequency domain basis vector parameter information (210). According to the method, the codebook structure type of the frequency domain basis vector parameter information reported by a terminal can be determined.

## Description

### TECHNICAL FIELD

The present disclosure relates to the field of mobile communication, and more particularly to a method and apparatus for configuring a codebook structure, a method and apparatus for reporting a codebook structure, a device and a storage medium.

### BACKGROUND

In the mobile communication technology, an access network device under discussion uses 4 transmission reception points (TRPs) to provide services to a terminal. The terminal may report channel state information (CSI) to the access network device by measuring a channel state information reference signal (CSI-RS) sent by each TRP. The CSI includes a frequency domain basis vector (FD basis vector).

In this case, the terminal may choose to use two codebook structures to report the FD basis vector to the access network device. One codebook structure is that the terminal independently selects FD basis vectors for a plurality of TRPs, that is, the FD basis vectors for the plurality of TRPs may be the same or different, and the terminal feeds back different FD basis vector parameter information for different TRPs. The other codebook structure is that the terminal jointly selects an FD basis vector for a plurality of TRPs, that is, the FD basis vectors for the plurality of TRPs may only be the same, and the terminal only needs to feed back one piece of FD basis vector parameter information for the plurality of TRPs.

How to determine a codebook structure type used by the terminal to report the FD basis vector is an urgent problem to be solved.

### SUMMARY

Embodiments of the present disclosure provide a method and apparatus for configuring a codebook structure, a method and apparatus for reporting a codebook structure, a device and a storage medium, which may determine a codebook structure type of frequency domain basis vector parameter information reported by a terminal. The technical solutions are as follows.

According to an aspect of the present disclosure, a method for configuring a codebook structure is provided, which is performed by a terminal, and includes: receiving first configuration information. The first configuration information is used to configure a codebook structure type of frequency domain basis vector parameter information.

According to an aspect of the present disclosure, a method for configuring a codebook structure is provided, which is performed by a network device, and includes: sending first configuration information. The first configuration information is used to configure a codebook structure type of frequency domain basis vector parameter information.

According to an aspect of the present disclosure, a method for reporting a codebook structure is provided, which is performed by a terminal, and includes: sending a codebook structure type indication. The codebook structure type indication is configured to indicate a codebook structure type of frequency domain basis vector parameter information.

According to an aspect of the present disclosure, a method for reporting a codebook structure is provided, which is performed by a network device, and includes: receiving a codebook structure type indication. The codebook structure type indication is configured to indicate a codebook structure type of frequency domain basis vector parameter information.

According to an aspect of the present disclosure, an apparatus for configuring a codebook structure is provided, which includes: a first receiving module configured to receive first configuration information. The first configuration information is used to configure a codebook structure type of frequency domain basis vector parameter information.

According to an aspect of the present disclosure, an apparatus for configuring a codebook structure is provided, which includes: a second sending module configured to send first configuration information. The first configuration information is used to configure a codebook structure type of frequency domain basis vector parameter information.

According to an aspect of the present disclosure, an apparatus for reporting a codebook structure is provided, which includes: a third sending module configured to send a codebook structure type indication. The codebook structure type indication is configured to indicate a codebook structure type of frequency domain basis vector parameter information.

According to an aspect of the present disclosure, an apparatus for reporting a codebook structure is provided, which includes: a fourth receiving module configured to receive a codebook structure type indication. The codebook structure type indication is configured to indicate a codebook structure type of frequency domain basis vector parameter information.

According to an aspect of the present disclosure, a terminal is provided, which includes: a processor; a transceiver connected to the processor; and a memory for storing instructions executable by the processor. The processor is configured to load and execute the executable instructions to implement the methods for configuring the codebook structure or the methods for reporting the codebook structure according to the above aspects.

According to an aspect of the present disclosure, a network device is provided, which includes: a processor; a transceiver connected to the processor; and a memory for storing instructions executable by the processor. The processor is configured to load and execute the executable instructions to implement the methods for configuring the codebook structure or the methods for reporting the codebook structure according to the above aspects.

According to an aspect of the present disclosure, a computer-readable storage medium is provided, which has stored therein executable program codes that, when loaded and executed by a processor, cause the methods for configuring the codebook structure according to the above aspects to be implemented or cause the methods for reporting the codebook structure according to the above aspects to be implemented.

According to an aspect of the present disclosure, a chip is provided, which includes a programmable logic circuit and/or program instructions for implementing the methods for configuring the codebook structure according to the above aspects or implementing the methods for reporting the codebook structure according to the above aspects when the chip is run on a terminal or a network device.

According to an aspect of the present disclosure, a computer program product is provided. When the computer program product is executed by a processor of a terminal or a network device, it is configured to implement the methods for configuring the codebook structure according to the above aspects or implement the methods for reporting the codebook structure according to the above aspects.

Embodiments of the present disclosure provide the method for configuring or reporting the codebook structure, and the network device configures the codebook structure type of the frequency domain basis vector parameter information for the terminal, so that the terminal reports a frequency domain basis vector parameter according to a configured codebook structure type. Alternatively, the terminal selects the codebook structure type of the frequency domain basis vector parameter information by itself, and indicates a selected codebook structure type by reporting the codebook structure type indication, so that the network device reads the frequency domain basis vector parameter reported by the terminal according to the codebook structure type.

### BRIEF DESCRIPTION OF THE DRAWINGS

In order to more clearly illustrate the technical solutions in embodiments of the present disclosure, the accompanying drawings to be used in the description of embodiments will be briefly introduced below. Apparently, the drawings in the following description only show some embodiments of the present disclosure. For those of ordinary skill in the art, other drawings may be obtained according to these drawings without any creative labor.
FIG. 1 shows a block diagram of a communication system according to an illustrative embodiment of the present disclosure.
FIG. 2 shows a flow chart of a method for configuring a codebook structure according to an illustrative embodiment of the present disclosure.
FIG. 3 shows a flow chart of a method for configuring a codebook structure according to an illustrative embodiment of the present disclosure.
FIG. 4 shows a flow chart of a method for configuring a codebook structure according to an illustrative embodiment of the present disclosure.
FIG. 5 shows a flow chart of a method for configuring a codebook structure according to an illustrative embodiment of the present disclosure.
FIG. 6 shows a flow chart of a method for reporting a codebook structure according to an illustrative embodiment of the present disclosure.
FIG. 7 shows a flow chart of a method for reporting a codebook structure according to an illustrative embodiment of the present disclosure.
FIG. 8 shows a flow chart of a method for reporting a codebook structure according to an illustrative embodiment of the present disclosure.
FIG. 9 shows a flow chart of a method for reporting a codebook structure according to an illustrative embodiment of the present disclosure.
FIG. 10 shows a block diagram of an apparatus for configuring a codebook structure according to an illustrative embodiment of the present disclosure.
FIG. 11 shows a block diagram of an apparatus for configuring a codebook structure according to an illustrative embodiment of the present disclosure.
FIG. 12 shows a block diagram of an apparatus for reporting a codebook structure according to an illustrative embodiment of the present disclosure.
FIG. 13 shows a block diagram of an apparatus for reporting a codebook structure according to an illustrative embodiment of the present disclosure.
FIG. 14 shows a schematic diagram of a communication device according to an illustrative embodiment of the present disclosure.

### DETAILED DESCRIPTION

In order to make objects, technical solutions and advantages of the present disclosure clearer, embodiments of the present disclosure will be further described in detail below in combination with the accompanying drawings.

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of devices and methods consistent with some aspects of the present disclosure as recited in the appended claims.

Terms used in the present disclosure are only for the purpose of describing specific embodiments, but should not be construed to limit the present disclosure. As used in the present disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated items listed.

It should be understood that, although terms such as "first", "second" and "third" may be used in the present disclosure for describing various information, these information should not be limited by these terms. These terms are only used for distinguishing information of the same type from each other. For example, first information may also be referred to as second information, and similarly, the second information may also be referred to as the first information, without departing from the scope of the present disclosure. For example, as used herein, the term "if" may be construed to mean "when", "upon" or "in response to determining" depending on the context.

First, the terms involved in embodiments of the present disclosure are explained.

### 1. Frequency domain basis vector

The frequency domain basis vector is a parameter value related to a subband corresponding to a channel quality indicator (CQI) and/or a parameter value related to a subband corresponding to a precoding matrix indicator (PMI). For example, the frequency domain basis vector is the same as the subband corresponding to the CQI, or is half or 1/R of the subband corresponding to the CQI, where R is an integer greater than 1.

The frequency domain basis vector is used to characterize a changing pattern of a channel in a frequency domain. The changing pattern characterized by the frequency domain basis vector is related to factors such as a multipath delay. It is understandable that when a signal is transmitted via a wireless channel, the signal may have different transmission delays on different transmission paths. The changing pattern of the channel in the frequency domain caused by the different transmission delays may be characterized by different frequency domain basis vectors.

Optionally, a dimension of the frequency domain basis vector may be N_{f}, that is, one frequency domain basis vector contains N_{f} elements.

Optionally, a dimension of the frequency domain basis vector may be equal to a numeric count of frequency domain units on which CSI measurements need to be performed. Since the numeric count of frequency domain units on which CSI measurements need to be performed at different moments may be different, the dimensions of the frequency domain basis vector may also be different. In other words, the dimension of the frequency domain basis vector is variable.

Optionally, a dimension of the frequency domain basis vector may also be equal to a numeric count of frequency domain units included in an available bandwidth of the terminal. The available bandwidth of the terminal may be configured by the network device. The available bandwidth of the terminal is part or all of a system bandwidth. The available bandwidth of the terminal may also be referred to a band width part (BWP), which is not limited in embodiments of the present disclosure.

### 2. Reference signal, reference signal resource, reference signal resource set

The reference signal includes, but is not limited to, a CSI-RS. The reference signal resource corresponds to at least one of a time domain resource, a frequency domain resource, or a code domain resource of the reference signal. The reference signal resource set includes one or more reference signal resources.

As an example for illustration, the reference signal resource is a CSI-RS resource, and the CSI-RS resource may be classified into a non zero power (NZP) CSI-RS resource and a zero power (ZP) CSI-RS resource.

The CSI-RS resource may be configured via a CSI reporting setting. The CSI reporting setting may configure a CSI-RS resource set for a channel measurement (CM). Optionally, the CSI reporting setting may also configure a CSI-RS resource set for an interference measurement (IM). Optionally, the CSI reporting setting may also configure an NZP CSI-RS resource set for an interference measurement.

The CSI reporting setting may be used to indicate a time domain behavior, a bandwidth, a format corresponding to a report quantity, or the like of CSI reporting. The time domain behavior includes, for example, periodic, semi-persistent, and aperiodic behaviors. The terminal may generate one CSI report based on one CSI reporting setting.

### 3. CSI

Illustratively, the CSI may include at least one of: a precoding matrix indicator (PMI), a rank indication (RI), a channel quality indicator (CQI), a CSI-RS resource indicator (CRI) or a layer indicator (LI).

The application scenarios of the present disclosure are explained below.

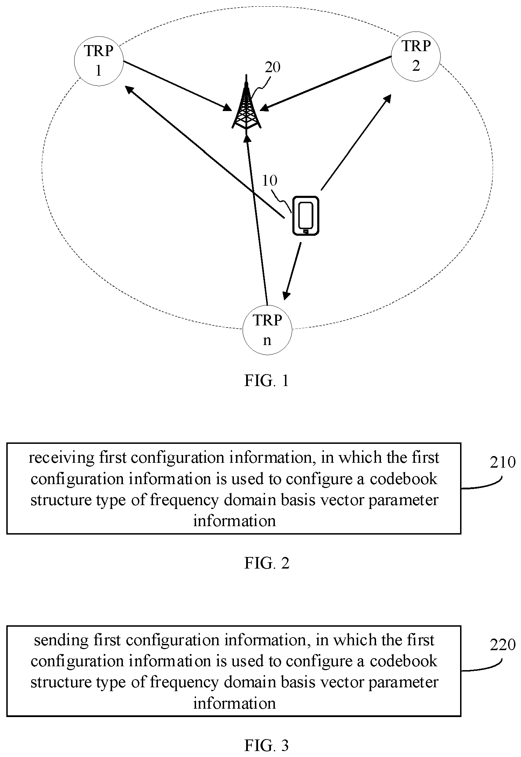

FIG. 1 shows a block diagram of a communication system according to an illustrative embodiment of the present disclosure. The communication system may include a terminal 10 and a network device 20.

The communication system generally includes a plurality of terminals 10, and one or more terminals 10 may be distributed in a cell managed by each network device 20. The terminal 10 may include various devices with wireless communication functions, like handheld devices, vehicle-mounted devices, wearable devices, computing devices or other processing devices connected to wireless modems, as well as various forms of user equipment (UE), mobile stations (MSs) and so on. For convenience of description, in embodiments of the present disclosure, the above-mentioned devices are collectively referred to as terminals.

The network device 20 is a device deployed in an access network to provide the wireless communication function for the terminal 10. For the convenience of description, in embodiments of the present disclosure, the above-mentioned devices that provide the wireless communication function for the terminal 10 are collectively referred to as network devices. A connection may be established between the network device 20 and the terminal 10 via a radio, so that communications, including signaling and data interactions, may be performed through the connection. There may be a plurality of network devices 20, and two adjacent network devices 20 may be communicated in a wired or wireless manner. The terminal 10 may hand over between different network devices 20, that is, establish connections with different network devices 20.

Illustratively, one network device 20 is deployed with a plurality of TRP/remote radio heads (RRHs), for example, the network device 20 corresponds to TRP1, TRP2,...,TRPn. The network device uses the plurality of TRP/RRHs to communicate with the terminal. Alternatively, the network device uses the plurality of TRP/RRHs to provide services to the terminal.

The network device 20 may include various forms of macro base stations, micro base stations, relay stations, access points, etc. In systems using different wireless access technologies, the device with the network device function may have different names, for example, it is called gNodeB or gNB in a 5G NR system. As the communication technology evolves, the name for the "network device" may change.

The technical solutions provided in the present disclosure may be applied to various communication systems, for example, an internet of things (IoT), a narrow band internet of things (NB-IoT), or a long term evolution (LTE), may also be applied to a fifth generation (5G) communication system, may also be applied to an LTE and 5G hybrid architecture, may also be applied to a 5G NR system, and new communication systems that will emerge in the future development of communications, such as 6G communication systems and 7G communication systems. The 5G communication system described in the present disclosure may include at least one of a non-standalone (NSA) 5G communication system or a standalone (SA) 5G communication system. The communication system may also be a public land mobile network (PLMN) network, a device-to-device (D2D) network, a machine-to-machine (M2M) network or other networks.

FIG. 2 shows a flow chart of a method for configuring a codebook structure according to an illustrative embodiment of the present disclosure, which may be performed by, for example, a terminal as shown in FIG. 1. The method includes at least part of the following contents.

In **step 210,** first configuration information is received, in which the first configuration information is used to configure a codebook structure type of frequency domain basis vector (FD basis vector) parameter information.

Optionally, the network device sends the first configuration information to the terminal to configure the codebook structure type of the frequency domain basis vector parameter information for the terminal in a case where the terminal communicates with a plurality of TRPs of a network device. In other words, in a case where a plurality of TRPs of a network device provide services for the terminal, the terminal receives the first configuration information sent by the network device, and the first configuration information includes the codebook structure type of the frequency domain basis vector parameter information.

The codebook structure type of the frequency domain basis vector parameter information is used to indicate a method for selecting and reporting the frequency domain basis vector parameter information.

Optionally, the codebook structure type includes two types: type 1 and type 2.
- A codebook structure of the type 1 reports different frequency domain basis vector parameter information for different channel measurement resources (CMRs).
- A codebook structure of the type 2 reports frequency domain basis vector parameter information for at least two CMRs.

The at least two CMRs may be all CMRs. Alternatively, the at least two CMRs may be at least two CMRs in all CMRs.

The at least two CMRs correspond to different NZP CSI-RS resources, and/or the at least two CMRs correspond to different ports of one NZP CSI-RS resource.

Different CMRs correspond to different TRPs.

The terminal reports different frequency domain basis vector parameter information for different CMRs in a case where the codebook structure type is the type 1. That is, the terminal reports different frequency domain basis vector parameter information corresponding to a plurality of CMRs in a case where the plurality of CMRs are provided.

In the type 1, the FD basis vectors for different CMRs are reported respectively, that is, different pieces of FD basis vector parameter information are reported.

For example, the terminal receives a first CSI-RS on a first CMR and receives a second CSI-RS on a second CMR, then the terminal reports frequency domain basis vector parameter information corresponding to the first CSI-RS and reports frequency domain basis vector parameter information corresponding to the second CSI-RS.

The terminal reports the frequency domain basis vector parameter information for different CMRs in a case where the codebook structure type is the type 2. That is, the terminal reports frequency domain basis vector parameter information corresponding to a plurality of CMRs in a case where the plurality of CMRs are provided.

In the type 2, the FD basis vector for all CMRs is reported jointly, that is, the FD basis vector parameter information is reported. That is, the plurality of CMRs correspond to the same frequency domain basis vector parameter information.

For example, the terminal receives a first CSI-RS on a first CMR and receives a second CSI-RS on a second CMR, and the terminal reports frequency domain basis vector parameter information corresponding to the first CSI-RS and the second CSI-RS.

That is, the network device configures the codebook structure type for the terminal in a case where the network device uses a plurality of TRP/RRHs to provide services to the terminal. The terminal independently selects the FD basis vectors for the plurality of TRPs in a case where the codebook structure type is the type 1. The FD basis vectors for the plurality of TRPs may be the same or different, and the terminal feeds back FD basis vector parameter information for each TRP. In a case where the codebook structure type is the type 2, the terminal jointly selects an FD basis vector for the plurality of TRPs, the FD basis vectors for the plurality of TRPs may only be the same, and the terminal feeds back FD basis vector parameter information for the plurality of TRPs.

Optionally, the frequency domain basis vector parameter information includes at least one of:
- a numeric count of frequency domain basis vectors;
- a frequency domain basis vector index (FD basis vector index); or
- a starting position of a frequency domain basis vector window (FD basis vector window).

Optionally, the first configuration information is carried in a radio resource control (RRC) message, or the first configuration information is carried in a medium access control control element (MAC CE) message.

Optionally, the terminal receives CSI-RS configuration information sent by the network device, and the CSI-RS configuration information includes the first configuration information.

The terminal selects the frequency domain basis vector according to the first configuration information, and reports the frequency domain basis vector parameter information to the network device.

To summarize, in the solutions provided in embodiments of the present disclosure, the network device configures the codebook structure type of the frequency domain basis vector parameter information for the terminal, so that the terminal reports a frequency domain basis vector parameter according to a configured codebook structure type, which improves a transmission performance based on the plurality of TRPs while reducing a signaling overhead of a CSI reporting.

FIG. 3 shows a flow chart of a method for configuring a codebook structure according to an illustrative embodiment of the present disclosure, which may be performed by, for example, a network device as shown in FIG. 1. The method includes at least part of the following contents.

**In step 220,** first configuration information is sent, in which the first configuration information is used to configure a codebook structure type of frequency domain basis vector parameter information.

The network device may be an access network device.

Optionally, the network device sends the first configuration information to the terminal to configure the codebook structure type of the frequency domain basis vector parameter information for the terminal in a case where a terminal communicates with a plurality of TRPs of the network device.

Optionally, the codebook structure type includes two types: type 1 and type 2.
- A codebook structure of the type 1 reports different frequency domain basis vector parameter information for different CMRs.
- A codebook structure of the type 2 reports frequency domain basis vector parameter information for at least two CMRs.

Optionally, different CMRs correspond to different TRPs.

Optionally, the frequency domain basis vector parameter information includes at least one of:
- a numeric count of frequency domain basis vectors;
- a FD basis vector index; or
- a starting position of a FD basis vector window.

Optionally, the first configuration information is carried in an RRC message, or the first configuration information is carried in an MAC CE message.

Optionally, the network device sends CSI-RS configuration information to the terminal, and the CSI-RS configuration information includes the first configuration information.

To summarize, in the solutions provided in embodiments of the present disclosure, the network device configures the codebook structure type of the frequency domain basis vector parameter information for the terminal, so that the terminal reports a frequency domain basis vector parameter according to a configured codebook structure type, which improves a transmission performance based on the plurality of TRPs while reducing a signaling overhead of a CSI reporting.

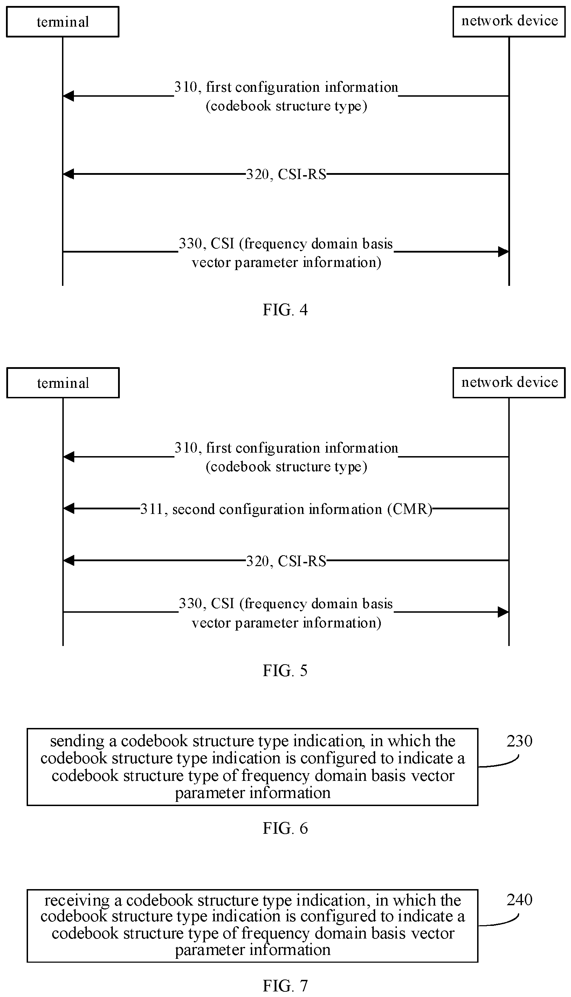

FIG. 4 shows a flow chart of another method for configuring a codebook structure according to an illustrative embodiment of the present disclosure, which may be performed by, for example, a terminal and a network device as shown in FIG. 1. The method includes at least part of the following contents.

In **step 310,** the network device sends first configuration information to the terminal, in which the first configuration information is used to configure a codebook structure type of frequency domain basis vector parameter information.

Illustratively, the network device sends CSI-RS configuration information to the terminal, and the CSI-RS configuration information includes configuration information (first configuration information) of the codebook structure type. For example, the configuration information of the codebook structure type is 0, which indicates type 1 of the codebook structure type, and the configuration information of the codebook structure type is 1, which indicates type 2 of the codebook structure type.

Optionally, the network device may also configure a CMR for the terminal.

As shown in FIG. 5, the method may further include the following steps.

In **step 311,** the network device sends second configuration information, in which the second configuration information is used to configure at least two CMRs. The terminal receives the second configuration information. The network device sends the second configuration information to the terminal, and the terminal receives the second configuration information sent by the network device.

The at least two CMRs correspond to different NZP CSI-RS resources, and/or the at least two CMRs correspond to different ports of one NZP CSI-RS resource.

For example, the second configuration information sent by the network device is used to configure a first CMR, a second CMR, and a third CMR. The first CMR corresponds to a first NZP CSI-RS resource, the second CMR corresponds to a first port of a second NZP CSI-RS resource, and the third CMR corresponds to a second port of the second NZP CSI-RS resource. Then, the first CMR, the second CMR and the third CMR correspond to different NZP CSI-RS resources, and the second CMR and the third CMR correspond to different ports of the same NZP CSI-RS resource.

Optionally, different CMRs correspond to different TRPs. The terminal receives CSI-RSs sent by different TRPs on different CMRs.

That is, different CMRs are different NZP CSI-RS resources, or different CMRs are different port groups corresponding to a plurality of ports of the same NZP CSI-RS resource.

Optionally, the execution order of the step 310 and the step 311 is not limited, and the two steps may also be executed simultaneously.

Optionally, the first configuration information is carried in an RRC message or an MAC CE message. Optionally, the first configuration information and the second configuration information may be carried in the same message, or the first configuration information and the second configuration information may be carried in different messages.

Optionally, the network device configures the at least two CMRs for the terminal, and the terminal receives CSI-RSs on the at least two CMRs.

For example, the network device configures a first CMR and a second CMR for the terminal, the first CMR is a first NZP CSI-RS resource, and the second CMR is a second NZP CSI-RS resource. Alternatively, the first CMR is port 1 of a first NZP CSI-RS resource, and the second CMR is port 2 of the first NZP CSI-RS resource. The network device sends a first CSI-RS on the first CMR and sends a second CSI-RS on the second CMR. The terminal receives the two CSI-RSs on the first CMR and the second CMR respectively according to the second configuration information of the CMR.

In **step 320,** the network device sends a CSI-RS to the terminal.

The network device sends the CSI-RS according to a configured CMR.

Optionally, the network device uses a plurality of TRPs to send a plurality of CSI-RSs respectively. Optionally, the plurality of TRPs use different CMRs to send the CSI-RS.

The terminal receives the CSI-RS sent by the network device and generates a CSI.

The terminal receives the CSI-RSs sent by the plurality of TRPs respectively, and generates frequency domain basis vector parameter information according to the CMR and a codebook structure type configured by the network device.

In **step 330,** the terminal sends the CSI to the network device, and the CSI includes the frequency domain basis vector parameter information.

The terminal sends the frequency domain basis vector parameter information according to the first configuration information. That is, the terminal generates the frequency domain basis vector parameter information according to the codebook structure type configured by the network device, and reports the frequency domain basis vector parameter information to the network device.

The terminal generates the CSI according to the codebook structure type configured by the network device, and reports the CSI to the network device, in which the CSI includes the frequency domain basis vector parameter information.

The terminal sends the frequency domain basis vector parameter information according to the first configuration information and the second configuration information. The second configuration information is used to configure the at least two CMRs. That is, the terminal generates the frequency domain basis vector parameter information according to the codebook structure type configured by the network device and the CMR configured by the network device, and reports the frequency domain basis vector parameter information to the network device.

The terminal generates the CSI according to the codebook structure type configured by the network device and the CMR configured by the network device, and reports the CSI to the network device, in which the CSI includes the frequency domain basis vector parameter information.

For example, the first configuration information indicates a use of the codebook structure type of type 1 to report the frequency domain basis vector parameter information, and a first CMR and a second CMR are configured in the second configuration information. The terminal generates first frequency domain basis vector parameter information according to a CSI-RS received on the first CMR; generates second frequency domain basis vector parameter information according to a CSI-RS received on the second CMR; and the terminal reports the first frequency domain basis vector parameter information and the second frequency domain basis vector parameter information to the network device respectively.

For another example, the first configuration information indicates a use of the codebook structure type of type 2 to report frequency domain basis vector parameter information, and a first CMR and a second CMR are configured in the second configuration information. The terminal generates frequency domain basis vector parameter information according to a CSI-RS received on the first CMR and a CSI-RS received on the second CMR, and the terminal reports the frequency domain basis vector parameter information to the network device.

To summarize, in the method for configuring the codebook structure provided in embodiments of the present disclosure, the network device configures the codebook structure type and the CMR for the terminal, and the terminal determines the frequency domain basis vector parameter information according to the codebook structure type and the CMR configured by the network device and reports the frequency domain basis vector parameter information to the network device. In a case where the network device configures the codebook structure type as the type 1, the terminal reports different frequency domain basis vector parameter information for different CMRs respectively; in a case where the network device configures the codebook structure type as the type 2, the terminal reports the frequency domain basis vector parameter information for the at least two CMRs, which improves a transmission performance based on the plurality of TRPs while reducing a signaling overhead of a CSI reporting.

FIG. 6 shows a flow chart of a method for reporting a codebook structure according to an illustrative embodiment of the present disclosure, which may be performed by, for example, a terminal as shown in FIG. 1. The method includes at least part of the following contents.

In **step 230,** a codebook structure type indication is sent, in which the codebook structure type indication is configured to indicate a codebook structure type of frequency domain basis vector parameter information.

Optionally, in a case where the terminal communicates with a plurality of TRPs of a network device, the terminal selects the codebook structure type for the frequency domain basis vector parameter information, and reports a selected codebook structure type to the network device via the codebook structure type indication. In other words, in a case where the plurality of TRPs of the network device provide services for the terminal, the terminal reports the codebook structure type indication to the network device, and the codebook structure type indication indicates the codebook structure type of the frequency domain basis vector parameter information.

Optionally, the terminal sends a CSI to the network device, and the CSI includes the codebook structure type indication. The CSI is carried on a physical uplink shared channel (PUSCH) or a physical uplink control channel (PUCCH), and then the codebook structure type indication is carried on the PUSCH or the PUCCH.

Optionally, the CSI further includes frequency domain basis vector parameter information. That is, the CSI includes the codebook structure type indication and the frequency domain basis vector parameter information, and the network device reads the frequency domain basis vector parameter information according to the codebook structure type indication.

Optionally, before the step 230, the network device enables a codebook structure type indication bit in the CSI. The network device sends indication information to the terminal, and the indication information is used to enable a codebook structure type indication field in the CSI, and the indication information is carried in an RRC message or an MAC CE message. In a case where the network device enables the codebook structure type indication in the CSI, the terminal sends the CSI to the network device, and the CSI includes the codebook structure type indication.

When the network device enables the codebook structure type indication field, the terminal uses the codebook structure type indication field to indicate to the network device which codebook structure type is used to report the frequency domain basis vector parameter information.

The codebook structure type of the frequency domain basis vector parameter information is used to indicate a method for selecting and reporting the frequency domain basis vector parameter information.

Optionally, the codebook structure type includes two types: type 1 and type 2.
- A codebook structure of the type 1 reports different frequency domain basis vector parameter information for different CMRs.
- A codebook structure of the type 2 reports frequency domain basis vector parameter information for at least two CMRs.

Optionally, different CMRs correspond to different TRPs.

The at least two CMRs may be all CMRs. Alternatively, the at least two CMRs may be at least two CMRs in all CMRs.

In a case where the terminal selects codebook structure type 1, the terminal reports different frequency domain basis vector parameter information for different CMRs, that is, the terminal reports different frequency domain basis vector parameter information corresponding to a plurality of CMRs in a case where the plurality of CMRs are provided.

In the type 1, FD basis vectors for different CMRs are reported respectively, that is, different pieces of FD basis vector parameter information are reported.

For example, the terminal receives a first CSI-RS on a first CMR and receives a second CSI-RS on a second CMR, then the terminal reports the codebook structure type indication: the type 1, and reports frequency domain basis vector parameter information corresponding to the first CSI-RS and frequency domain basis vector parameter information corresponding to the second CSI-RS.

In a case where the terminal selects codebook structure type 2, the terminal reports the frequency domain basis vector parameter information for different CMRs, that is, the terminal reports the frequency domain basis vector parameter information corresponding to a plurality of CMRs in a case where the plurality of CMRs are provided.

In the type 2, FD basis vectors for all CMRs are reported jointly, that is, the FD basis vector parameter information is reported.

For example, the terminal receives a first CSI-RS on a first CMR and receives a second CSI-RS on a second CMR, then the terminal reports the codebook structure type indication: the type 2, and reports the frequency domain basis vector parameter information corresponding to the first CSI-RS and the second CSI-RS.

That is, in a case where the network device uses a plurality of TRP/RRHs to provide services to the terminal, the network device enables the codebook structure type indication bit in the CSI, and the terminal autonomously selects the codebook structure type of the frequency domain basis vector parameter information, and uses the codebook structure type indication bit in the CSI to indicate to the network device which codebook structure type is used. In a case where the codebook structure type selected by the terminal is the type 1, the terminal independently selects the FD basis vectors for the plurality of TRPs, the FD basis vectors for the plurality of TRPs may be the same or different, and the terminal feeds back different FD basis vector parameter information for different TRPs. In a case where the codebook structure type selected by the terminal is the type 2, the terminal jointly selects the FD basis vector for the plurality of TRPs, the FD basis vectors for the plurality of TRPs may only be the same, and the terminal feeds back the FD basis vector parameter information for the plurality of TRPs.

Optionally, the frequency domain basis vector parameter information includes at least one of:
- a numeric count of frequency domain basis vectors;
- a FD basis vector index; or
- a starting position of a FD basis vector window.

To summarize, in the solutions provided in embodiments of the present disclosure, the terminal selects the codebook structure type of frequency domain basis vector parameter information by itself, and indicates a selected codebook structure type by reporting the codebook structure type indication, so that the network device reads the frequency domain basis vector parameters reported by the terminal according to the codebook structure type, which improves a transmission performance based on the plurality of TRPs while reducing a signaling overhead of a CSI reporting.

FIG. 7 shows a flow chart of a method for reporting a codebook structure according to an illustrative embodiment of the present disclosure, which may be performed by, for example, a network device as shown in FIG. 1. The method includes at least part of the following contents.

In **step 240,** a codebook structure type indication is received, in which the codebook structure type indication is configured to indicate a codebook structure type of frequency domain basis vector parameter information.

The network device may be an access network device.

The network device receives the codebook structure type indication sent by a terminal.

Optionally, in a case where the terminal communicates with a plurality of TRPs of the network device, the terminal selects the codebook structure type for the frequency domain basis vector parameter information, and reports a selected codebook structure type to the network device via the codebook structure type indication. In other words, in a case where the plurality of TRPs of the network device provide services for the terminal, the terminal reports the codebook structure type indication to the network device, and the codebook structure type indication indicates the codebook structure type of the frequency domain basis vector parameter information.

That is, in a case where the terminal communicates with the plurality of TRPs of the network device, the network device receives the codebook structure type indication sent by the terminal. Alternatively, in a case where the network device uses the plurality of TRPs to provide services to the terminal, the network device receives the codebook structure type indication sent by the terminal.

Optionally, the network device receives a CSI sent by the terminal, and the CSI includes the codebook structure type indication. The CSI is carried on a PUSCH or a PUCCH, and then the codebook structure type indication is carried on the PUSCH or the PUCCH.

Optionally, the CSI further includes frequency domain basis vector parameter information. That is, the CSI includes the codebook structure type indication and the frequency domain basis vector parameter information, and the network device reads the frequency domain basis vector parameter information according to the codebook structure type indication.

Optionally, before the step 230, the network device enables a codebook structure type indication bit in the CSI. The network device sends indication information to the terminal, and the indication information is used to enable a codebook structure type indication field in the CSI, and the indication information is carried in an RRC message or an MAC CE message. In a case where the network device enables the codebook structure type indication in the CSI, the terminal sends the CSI to the network device, and the CSI includes the codebook structure type indication.

Optionally, the codebook structure type includes two types: type 1 and type 2.
- A codebook structure of the type 1 reports different frequency domain basis vector parameter information for different CMRs.
- A codebook structure of the type 2 reports frequency domain basis vector parameter information for at least two CMRs.

Optionally, the frequency domain basis vector parameter information includes at least one of:
- a numeric count of frequency domain basis vectors;
- a FD basis vector index; or
- a starting position of a FD basis vector window.

To summarize, in the solutions provided in embodiments of the present disclosure, the terminal selects the codebook structure type of frequency domain basis vector parameter information by itself, and indicates a selected codebook structure type by reporting the codebook structure type indication, so that the network device reads the frequency domain basis vector parameters reported by the terminal according to the codebook structure type, which improves a transmission performance based on the plurality of TRPs while reducing a signaling overhead of a CSI reporting.

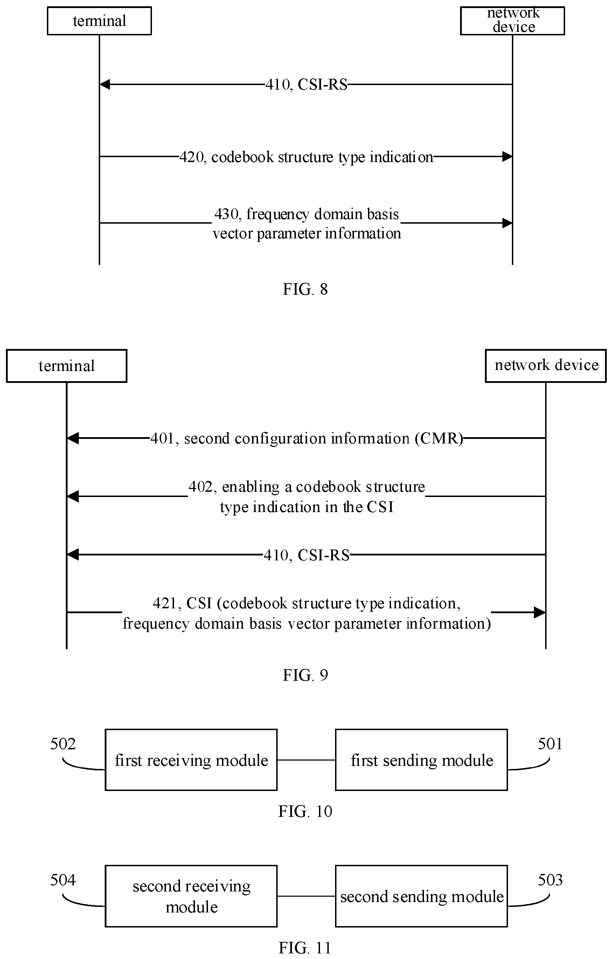

FIG. 8 shows a flow chart of another method for reporting a codebook structure according to an illustrative embodiment of the present disclosure, which may be performed by, for example, a terminal and a network device as shown in FIG. 1. The method includes at least part of the following contents.

In **step 410,** the network device sends a CSI-RS to the terminal.

The network device sends the CSI-RS according to a configured CMR.

Optionally, the network device uses a plurality of TRPs to send a plurality of CSI-RSs respectively. Optionally, the plurality of TRPs use different CMRs to send the CSI-RS.

The terminal receives the CSI-RS sent by the network device and generates a CSI.

The terminal receives the CSI-RSs sent by the plurality of TRPs respectively, and generates frequency domain basis vector parameter information according to the CMR and a selected codebook structure type.

Optionally, before the step 410, step 401 and step 402 may also be included. The execution order of the step 401 and the step 402 is not limited, and the two steps may also be executed simultaneously.

As shown in FIG. 9, the method may further include the following steps.

In **step 401,** the network device sends second configuration information, in which the second configuration information is used to configure at least two CMRs. The terminal receives the second configuration information. The network device sends the second configuration information to the terminal, and the terminal receives the second configuration information sent by the network device.

The at least two CMRs correspond to different NZP CSI-RS resources, and/or the at least two CMRs correspond to different ports of one NZP CSI-RS resource.

That is, different CMRs are different NZP CSI-RS resources, or different CMRs are different port groups corresponding to a plurality of ports of the same NZP CSI-RS resource.

Optionally, the second configuration information is carried in an RRC message or an MAC CE message.

Optionally, the network device configures the at least two CMRs for the terminal, and the terminal receives CSI-RSs on the at least two CMRs. The network device sends the CSI-RSs using the plurality of TRPs on the at least two CMRs configured.

For example, the network device configures a first CMR and a second CMR for the terminal, the first CMR is a first NZP CSI-RS resource, and the second CMR is a second NZP CSI-RS resource. Alternatively, the first CMR is port 1 of a first NZP CSI-RS resource, and the second CMR is port 2 of the first NZP CSI-RS resource. The network device sends a first CSI-RS on the first CMR and sends a second CSI-RS on the second CMR. The terminal receives the two CSI-RSs on the first CMR and the second CMR respectively according to the second configuration information of the CMR.

In **step 402,** the network device enables a codebook structure type indication in the CSI.

The network device sends indication information to the terminal, and the indication information is used to enable a codebook structure type indication field in the CSI. The indication information is carried in the RRC message or the MAC CE message.

The terminal autonomously selects the codebook structure type of the frequency domain basis vector parameter information in a case where the terminal receives the indication information. When reporting the CSI, a selected codebook structure type is indicated in the codebook structure type indication field of the CSI.

In **step 420,** the terminal sends the codebook structure type indication to the network device.

Regarding the optional step 420, reference may be made to the explanation of the step 230 in embodiments shown in FIG. 6.

In **step 430,** the terminal sends the frequency domain basis vector parameter information to the network device.

The terminal receives the CSI-RS and generates the frequency domain basis vector parameter information according to the selected codebook structure type.

The terminal receives the CSI-RS, generates the frequency domain basis vector parameter information according to the selected codebook structure type and the second configuration information (configuration information of the CMR), and reports the frequency domain basis vector parameter information to the network device.

For example, a first CMR and a second CMR are configured in the second configuration information, and the terminal chooses to use the codebook structure type of the type 1 to report the frequency domain basis vector parameter information. The terminal generates first frequency domain basis vector parameter information according to a CSI-RS received on the first CMR; generates second frequency domain basis vector parameter information according to a CSI-RS received on the second CMR; and the terminal reports the first frequency domain basis vector parameter information and the second frequency domain basis vector parameter information to the network device respectively.

For another example, a first CMR and a second CMR are configured in the second configuration information, and the terminal chooses to use the codebook structure type of the type 2 to report the frequency domain basis vector parameter information. The terminal generates the frequency domain basis vector parameter information according to a CSI-RS received on the first CMR and a CSI-RS received on the second CMR, and the terminal reports the frequency domain basis vector parameter information to the network device.

Optionally, the codebook structure type indication and the frequency domain basis vector parameter information may be carried in the CSI. As shown in FIG. 9, the step 420 and the step 430 may also be replaced by step 421.

In **step 421,** the terminal reports the CSI to the network device, and the CSI includes the codebook structure type indication and the frequency domain basis vector parameter information.

Optionally, the CSI includes a first portion (Part I) and a second portion (Part II), the first portion includes the codebook structure type indication, and the second portion includes the frequency domain basis vector parameter information.

A payload size of the first portion is fixed, and an information size of the second portion is determined according to an information field of the first portion. Optionally, the information field of the first portion includes the codebook structure type indication.

In a case where the CSI includes two portions, the codebook structure type indication is included in Part I, and the payload size of Part I is fixed, the information size of Part II is determined based on the information in Part I. For example, in a case where Part I indicates the codebook structure type indication to be the codebook structure type 1, the information size of Part II is larger, otherwise, the information size of Part II is smaller.

For example, Part I includes a CSI-RS resource indicator (CRI), rank indication information (rank indicator), etc.

For example, Part II includes information of a precoding matrix indicator (PMI), and the frequency domain basis vector parameter information is part of the PMI.

To summarize, in the method for reporting the codebook structure provided in embodiments of the present disclosure, the terminal autonomously selects the configuration codebook structure type, the network device configures the CMR for the terminal, and the terminal determines the frequency domain basis vector parameter information according to the selected codebook structure type and the CMR configured by the network device and reports the frequency domain basis vector parameter information to the network device. In a case where the codebook structure type is the type 1, the terminal reports different frequency domain basis vector parameter information for different CMRs respectively; in a case where the codebook structure type is the type 2, the terminal reports the frequency domain basis vector parameter information for the at least two CMRs, which improves a transmission performance based on the plurality of TRPs while reducing a signaling overhead of a CSI reporting.

It should be noted that the above embodiments may be split into new embodiments, or combined with other embodiments to form new embodiments. The combination between embodiments is not limited in the present disclosure.

FIG. 10 shows a block diagram of an apparatus for configuring a codebook structure according to an illustrative embodiment of the present disclosure. Referring to FIG. 10, the apparatus includes: a first receiving module 502 configured to receive first configuration information, in which the first configuration information is used to configure a codebook structure type of frequency domain basis vector parameter information.

In an optional embodiment, the codebook structure type includes type 1 and type 2; a codebook structure of the type 1 reports different frequency domain basis vector parameter information for different channel measurement resources (CMRs); and a codebook structure of the type 2 reports frequency domain basis vector parameter information for at least two CMRs.

In an optional embodiment, the first receiving module 502 is configured to receive second configuration information. The second configuration information is used to configure at least two CMRs.

In an optional embodiment, the at least two CMRs correspond to different non-zero power channel state information reference signal (NZP CSI-RS) resources; and/or the at least two CMRs correspond to different ports of one NZP CSI-RS resource.

In an optional embodiment, the frequency domain basis vector parameter information includes at least one of: a numeric count of frequency domain basis vectors; a frequency domain basis vector index; or a starting position of a frequency domain basis vector window.

In an optional embodiment, the apparatus further includes: a first sending module 501 configured to send the frequency domain basis vector parameter information according to the first configuration information.

In an optional embodiment, the apparatus further includes: a first sending module 501 configured to send the frequency domain basis vector parameter information according to the first configuration information and the second configuration information.

FIG. 11 shows a block diagram of an apparatus for configuring a codebook structure according to an illustrative embodiment of the present disclosure. Referring to FIG. 11, the apparatus includes: a second sending module 503 configured to send first configuration information, in which the first configuration information is used to configure a codebook structure type of frequency domain basis vector parameter information.

In an optional embodiment, the codebook structure type includes type 1 and type 2; a codebook structure of the type 1 reports different frequency domain basis vector parameter information for different channel measurement resources (CMRs); and a codebook structure of the type 2 reports frequency domain basis vector parameter information for at least two CMRs.

In an optional embodiment, the second sending module 503 is configured to send second configuration information. The second configuration information is used to configure at least two CMRs.

In an optional embodiment, the at least two CMRs correspond to different non-zero power channel state information reference signal (NZP CSI-RS) resources; and/or the at least two CMRs correspond to different ports of one NZP CSI-RS resource.

In an optional embodiment, the frequency domain basis vector parameter information includes at least one of: a numeric count of frequency domain basis vectors; a frequency domain basis vector index; or a starting position of a frequency domain basis vector window.

In an optional embodiment, the apparatus further includes: a second receiving module 504 configured to receive the frequency domain basis vector parameter information sent by a terminal according to the first configuration information.

In an optional embodiment, the apparatus further includes: a second receiving module 504 configured to receive the frequency domain basis vector parameter information sent by a terminal according to the first configuration information and the second configuration information.

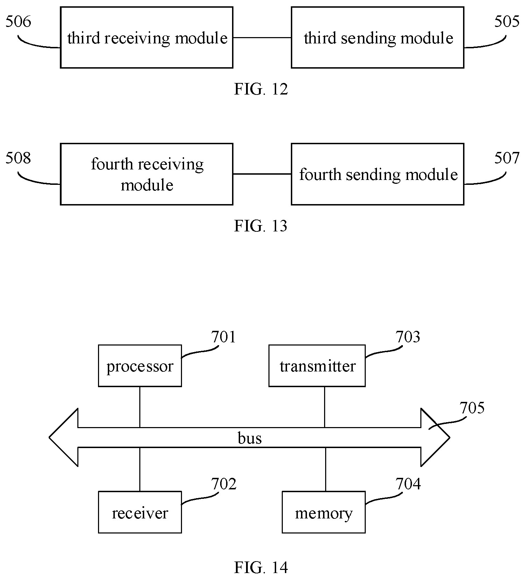

FIG. 12 shows a block diagram of an apparatus for reporting a codebook structure according to an illustrative embodiment of the present disclosure. Referring to FIG. 12, the apparatus includes: a third sending module 505 configured to send a codebook structure type indication, in which the codebook structure type indication is configured to indicate a codebook structure type of frequency domain basis vector parameter information.

In an optional embodiment, the codebook structure type includes type 1 and type 2; a codebook structure of the type 1 reports different frequency domain basis vector parameter information for different channel measurement resources (CMRs); and a codebook structure of the type 2 reports frequency domain basis vector parameter information for at least two CMRs.

In an optional embodiment, the apparatus further includes: a third receiving module 506 configured to receive second configuration information. The second configuration information is used to configure at least two CMRs.

In an optional embodiment, the at least two CMRs correspond to different non-zero power channel state information reference signal (NZP CSI-RS) resources; and/or the at least two CMRs correspond to different ports of one NZP CSI-RS resource.

In an optional embodiment, the frequency domain basis vector parameter information includes at least one of: a numeric count of frequency domain basis vectors; a frequency domain basis vector index; or a starting position of a frequency domain basis vector window.

In an optional embodiment, the third sending module 505 is configured to send channel state information (CSI). The CSI includes the codebook structure type indication.

In an optional embodiment, the CSI includes a first portion and a second portion, the first portion includes the codebook structure type indication, and the second portion includes the frequency domain basis vector parameter information.

In an optional embodiment, a payload size of the first portion is fixed, and an information size of the second portion is determined according to an information field of the first portion.

FIG. 13 shows a block diagram of an apparatus for reporting a codebook structure according to an illustrative embodiment of the present disclosure. Referring to FIG. 13, the apparatus includes: a fourth receiving module 508 configured to receive a codebook structure type indication, in which the codebook structure type indication is configured to indicate a codebook structure type of frequency domain basis vector parameter information.

In an optional embodiment, the codebook structure type includes type 1 and type 2; a codebook structure of the type 1 reports different frequency domain basis vector parameter information for different channel measurement resources (CMRs); and a codebook structure of the type 2 reports frequency domain basis vector parameter information for at least two CMRs.

In an optional embodiment, the apparatus further includes: a fourth sending module 507 configured to send second configuration information. The second configuration information is used to configure at least two CMRs.

In an optional embodiment, the at least two CMRs correspond to different non-zero power channel state information reference signal (NZP CSI-RS) resources; and/or the at least two CMRs correspond to different ports of one NZP CSI-RS resource.

In an optional embodiment, the frequency domain basis vector parameter information includes at least one of: a numeric count of frequency domain basis vectors; a frequency domain basis vector index; or a starting position of a frequency domain basis vector window.

In an optional embodiment, the fourth receiving module 508 is configured to receive channel state information (CSI). The CSI includes the codebook structure type indication.

In an optional embodiment, the CSI includes a first portion and a second portion, the first portion includes the codebook structure type indication, and the second portion includes the frequency domain basis vector parameter information.

In an optional embodiment, a payload size of the first portion is fixed, and an information size of the second portion is determined according to an information field of the first portion.

It should be noted that when realizing functions of the apparatus according to the above embodiments, an example for describing the individual functional modules classified by functions is given. In actual applications, the above functions may be assigned to different functional modules as needed, that is, an internal structure of the apparatus may be divided into different functional modules to complete all or some of the functions described above. In addition, the apparatus and method embodiments provided in the above embodiments belong to the same concept, and thus regarding specific implementations for the apparatus embodiments, reference may be made to details in the method embodiments, which will not be repeated here.

FIG. 14 shows a schematic diagram of a communication device according to an illustrative embodiment of the present disclosure. The communication device includes: a processor 701, a receiver 702, a transmitter 703, a memory 704 and a bus 705.

The processor 701 includes one or more processing cores. The processor 701 executes various functional applications and information processing by running software programs and modules.

The receiver 702 and the transmitter 703 may be implemented as one communication component, and the communication component may be a communication chip.

The memory 704 is connected to the processor 701 via the bus 705.

The memory 704 may be configured to store at least one program code, and the processor 701 is configured to execute the at least one program code to implement individual steps in the above method embodiments.

Moreover, the communication device may be a terminal or a network device. The memory 704 may be implemented using any type of volatile or non-volatile storage devices, or a combination thereof. The volatile or non-volatile storage devices include, but are not limited to, a magnetic or optical disk, an electrically erasable programmable read-only memory (EEPROM), an erasable programmable read only memory (EPROM), a static random-access memory (SRAM), a read-only memory (ROM), a magnetic memory, a flash memory, and a programmable read-only memory (PROM).

In an illustrative embodiment, a computer-readable storage medium is further provided. The computer-readable storage medium has stored therein an executable program code, and the executable program code is loaded and executed by the processor to implement the methods for configuring the codebook structure or the methods for reporting the codebook structure performed by the communication device according to the above various method embodiments.

In an illustrative embodiment, a chip is provided, which includes a programmable logic circuit and/or program instructions for implementing the methods for configuring the codebook structure or the methods for reporting the codebook structure according to various method embodiments when the chip is run on a terminal or a network device.

In an illustrative embodiment, a computer program product is provided. When the computer program product is executed by a processor of a terminal or a network device, it is configured to implement the methods for configuring the codebook structure or the methods for reporting the codebook structure according to the above various method embodiments.

Those of ordinary skill in the art shall understand that all or some of the steps to implement the above embodiments may be completed by a hardware, or may be completed by programs commanding the related hardware. The programs may be stored in a computer-readable storage medium. The storage medium mentioned above may be a read-only memory, a magnetic disk, an optical disk, or the like.

The above descriptions only involve optional embodiments of the present disclosure and are not intended to limit the present disclosure. Any modifications, equivalent substitutions, and improvements made within the spirit and principle of the present disclosure shall be included in the protection scope of the present disclosure.

## Claims

1. A method for configuring a codebook structure, performed by a terminal, comprising:
receiving first configuration information, wherein the first configuration information is used to configure a codebook structure type of frequency domain basis vector parameter information.

2. The method according to claim 1, wherein the codebook structure type comprises type 1 and type 2;
a codebook structure of the type 1 reports different frequency domain basis vector parameter information for different channel measurement resources (CMRs); and
a codebook structure of the type 2 reports frequency domain basis vector parameter information for at least two CMRs.

3. The method according to claim 1 or 2, further comprising:
receiving second configuration information, wherein the second configuration information is used to configure at least two CMRs.

4. The method according to claim 3, wherein
the at least two CMRs correspond to different non-zero power channel state information reference signal (NZP CSI-RS) resources; and/or
the at least two CMRs correspond to different ports of one NZP CSI-RS resource.

5. The method according to any one of claims 1 to 4, wherein the frequency domain basis vector parameter information comprises at least one of:
a numeric count of frequency domain basis vectors;
a frequency domain basis vector index; or
a starting position of a frequency domain basis vector window.

6. The method according to any one of claims 1 to 5, further comprising:
sending the frequency domain basis vector parameter information according to the first configuration information.

7. The method according to any one of claims 3 to 5, further comprising:
sending the frequency domain basis vector parameter information according to the first configuration information and the second configuration information.

8. A method for configuring a codebook structure, performed by a network device, comprising:
sending first configuration information, wherein the first configuration information is used to configure a codebook structure type of frequency domain basis vector parameter information.

9. The method according to claim 8, wherein the codebook structure type comprises type 1 and type 2;
a codebook structure of the type 1 reports different frequency domain basis vector parameter information for different channel measurement resources (CMRs); and
a codebook structure of the type 2 reports frequency domain basis vector parameter information for at least two CMRs.

10. The method according to claim 8 or 9, further comprising:
sending second configuration information, wherein the second configuration information is used to configure at least two CMRs.

11. The method according to claim 10, wherein
the at least two CMRs correspond to different non-zero power channel state information reference signal (NZP CSI-RS) resources; and/or
the at least two CMRs correspond to different ports of one NZP CSI-RS resource.

12. The method according to any one of claims 8 to 11, wherein the frequency domain basis vector parameter information comprises at least one of:
a numeric count of frequency domain basis vectors;
a frequency domain basis vector index; or
a starting position of a frequency domain basis vector window.

13. The method according to any one of claims 8 to 12, further comprising:
receiving the frequency domain basis vector parameter information sent by a terminal according to the first configuration information.

14. The method according to any one of claims 10 to 12, further comprising:
receiving the frequency domain basis vector parameter information sent by a terminal according to the first configuration information and the second configuration information.

15. A method for reporting a codebook structure, performed by a terminal, comprising:
sending a codebook structure type indication, wherein the codebook structure type indication is configured to indicate a codebook structure type of frequency domain basis vector parameter information.

16. The method according to claim 15, wherein the codebook structure type comprises type 1 and type 2;
a codebook structure of the type 1 reports different frequency domain basis vector parameter information for different channel measurement resources (CMRs); and
a codebook structure of the type 2 reports frequency domain basis vector parameter information for at least two CMRs.

17. The method according to claim 15 or 16, further comprising:
receiving second configuration information, wherein the second configuration information is used to configure at least two CMRs.

18. The method according to claim 17, wherein
the at least two CMRs correspond to different non-zero power channel state information reference signal (NZP CSI-RS) resources; and/or
the at least two CMRs correspond to different ports of one NZP CSI-RS resource.

19. The method according to any one of claims 15 to 18, wherein the frequency domain basis vector parameter information comprises at least one of:
a numeric count of frequency domain basis vectors;
a frequency domain basis vector index; or
a starting position of a frequency domain basis vector window.

20. The method according to any one of claims 15 to 19, wherein sending the codebook structure type indication comprises:
sending channel state information (CSI), wherein the CSI comprises the codebook structure type indication.

21. The method according to claim 20, wherein the CSI comprises a first portion and a second portion, the first portion comprises the codebook structure type indication, and the second portion comprises the frequency domain basis vector parameter information.

22. The method according to claim 21, wherein a payload size of the first portion is fixed, and an information size of the second portion is determined according to an information field of the first portion.

23. A method for reporting a codebook structure, performed by a network device, comprising:
receiving a codebook structure type indication, wherein the codebook structure type indication is configured to indicate a codebook structure type of frequency domain basis vector parameter information.

24. The method according to claim 23, wherein the codebook structure type comprises type 1 and type 2;
a codebook structure of the type 1 reports different frequency domain basis vector parameter information for different channel measurement resources (CMRs); and
a codebook structure of the type 2 reports frequency domain basis vector parameter information for at least two CMRs.

25. The method according to claim 1 or 2, further comprising:
sending second configuration information, wherein the second configuration information is used to configure at least two CMRs.

26. The method according to claim 25, wherein
the at least two CMRs correspond to different non-zero power channel state information reference signal (NZP CSI-RS) resources; and/or
the at least two CMRs correspond to different ports of one NZP CSI-RS resource.

27. The method according to any one of claims 23 to 26, wherein the frequency domain basis vector parameter information comprises at least one of:
a numeric count of frequency domain basis vectors;
a frequency domain basis vector index; or
a starting position of a frequency domain basis vector window.

28. The method according to any one of claims 23 to 27, wherein receiving the codebook structure type indication comprises:
receiving channel state information (CSI), wherein the CSI comprises the codebook structure type indication.

29. The method according to claim 28, wherein the CSI comprises a first portion and a second portion, the first portion comprises the codebook structure type indication, and the second portion comprises the frequency domain basis vector parameter information.

30. The method according to claim 29, wherein a payload size of the first portion is fixed, and an information size of the second portion is determined according to an information field of the first portion.

31. An apparatus for configuring a codebook structure, comprising:
a first receiving module configured to receive first configuration information, wherein the first configuration information is used to configure a codebook structure type of frequency domain basis vector parameter information.

32. An apparatus for configuring a codebook structure, comprising:
a second sending module configured to send first configuration information, wherein the first configuration information is used to configure a codebook structure type of frequency domain basis vector parameter information.

33. An apparatus for reporting a codebook structure, comprising:
a third sending module configured to send a codebook structure type indication, wherein the codebook structure type indication is configured to indicate a codebook structure type of frequency domain basis vector parameter information.

34. An apparatus for reporting a codebook structure, comprising:
a fourth receiving module configured to receive a codebook structure type indication, wherein the codebook structure type indication is configured to indicate a codebook structure type of frequency domain basis vector parameter information.

35. A terminal, comprising:
a processor; and
a transceiver connected to the processor,
wherein the processor is configured to load and execute executable instructions to implement the method for configuring the codebook structure according to any one of claims 1 to 7, or to implement the method for reporting the codebook structure according to any one of claims 15 to 22.

36. A network device, comprising:
a processor; and
a transceiver connected to the processor,
wherein the processor is configured to load and execute executable instructions to implement the method for configuring the codebook structure according to any one of claims 8 to 14, or to implement the method for reporting the codebook structure according to any one of claims 23 to 30.

37. A computer-readable storage medium having stored therein executable program codes that, when loaded and executed by a processor, cause the method for configuring the codebook structure according to any one of claims 1 to 14 to be implemented, or cause the method for reporting the codebook structure according to any one of claims 15 to 30 to be implemented.

38. A computer program product configured to implement the method for configuring the codebook structure according to any one of claims 1 to 14, or to implement the method for reporting the codebook structure according to any one of claims 15 to 30 when executed by a processor of a terminal or a network device.
